(19) Europäisches Patentamt
European Patent Office
Office européen des brevets

(11) **EP 2 978 644 B1**

(12) **EUROPÄISCHE PATENTSCHRIFT**

(45) Veröffentlichungstag und Bekanntmachung des Hinweises auf die Patenterteilung:
**14.06.2017 Patentblatt 2017/24**

(21) Anmeldenummer: **14707784.6**

(22) Anmeldetag: **04.03.2014**

(51) Int Cl.:
***B60T 8/32*** *(2006.01)*

(86) Internationale Anmeldenummer:
**PCT/EP2014/054146**

(87) Internationale Veröffentlichungsnummer:
**WO 2014/154450 (02.10.2014 Gazette 2014/40)**

(54) **VERFAHREN ZUM BETRIEB EINER BREMSANLAGE FÜR KRAFTFAHRZEUGE UND BREMSANLAGE WORIN DAS VERFAHREN DURCHGEFÜHRT WIRD**

METHOD FOR OPERATING A BRAKE SYSTEM FOR MOTOR VEHICLES AND A BRAKE SYSTEM IN WHICH THE METHOD IS CARRIED OUT

PROCÉDÉ DE FONCTIONNEMENT D'UN SYSTÈME DE FREINAGE POUR VÉHICULES AUTOMOBILES ET SYSTÈME DE FREINAGE DANS LEQUEL LEMETTANT EN UVRE CE PROCÉDÉ EST MIS EN UVRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2013 DE 102013205182**
**30.10.2013 DE 102013222061**

(43) Veröffentlichungstag der Anmeldung:
**03.02.2016 Patentblatt 2016/05**

(73) Patentinhaber: **Continental Teves AG&Co. Ohg 60488 Frankfurt (DE)**

(72) Erfinder:
• **ROLL, Georg**
  **60438 Frankfurt (DE)**
• **BÖHM, Jürgen**
  **65558 Oberneisen (DE)**
• **BESIER, Marco**
  **65307 Bad Schwalbach (DE)**

(56) Entgegenhaltungen:
**EP-A1- 0 199 352       EP-A2- 0 927 671**
**WO-A1-2010/091883   WO-A1-2011/029812**
**WO-A1-2012/010475   DE-A1-102011 076 675**

EP 2 978 644 B1

## Beschreibung

Die Erfindung betrifft ein Verfahren zur Regelung einer Bremsanlage für Kraftfahrzeuge gemäß dem Oberbegriff von Anspruch 1 sowie eine elektrohydraulische Bremsanlage gemäß dem Oberbegriff von Anspruch 13.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen, entweder direkt oder über den Hauptbremszylinder, stattfindet. Um dem Fahrzeugführer in der Betriebsart "Brake-by-wire" ein angenehmes Pedalgefühl zu vermitteln, umfassen die Bremsanlagen üblicherweise eine Bremspedalgefühl-Simulationseinrichtung, welche z.B. mit dem Hauptbremszylinder in Wirkverbindung steht. Zur Ansteuerung der Bremsanlage ist ein Sollwertgeber vorgesehen, welcher z.B. die elektrischen Signale von ein oder mehreren Sensoren zur Erfassung des Fahrerbremswunsches (Betätigungswunsches) auswertet, um einen Sollwert für die Ansteuerung der Druckbereitstellungseinrichtung zu bestimmen. Bei diesen Bremsanlagen kann die Druckbereitstellungseinrichtung jedoch auch ohne aktives Zutun des Fahrers aufgrund elektronischer Signale betätigt werden. Diese elektronischen Signale können beispielsweise von einem elektronischen Stabilitätsprogramm (ESC) oder einem Abstandsregelsystem (ACC) ausgegeben werden, so dass der Sollwertgeber einen Sollwert zur Ansteuerung der Druckbereitstellungseinrichtung anhand dieser Signale bestimmt.

In der DE 10 2011 076 675 A1 ist ein Verfahren zur Regelung eines elektrohydraulischen Bremssystems für Kraftfahrzeuge mit einer elektronisch ansteuerbaren Druckbereitstellungseinrichtung, welche mit hydraulisch betätigbaren Radbremsen verbunden ist, beschrieben. Die Druckbereitstellungseinrichtung umfasst eine Zylinder-Kolben-Anordnung mit einem hydraulischen Druckraum, deren Kolben durch einen elektromechanischen Aktuator relativ zu einer Ruheposition verschiebbar ist. Zur Druckregelung werden ein Vordruck-Istwert und ein Vordruck-Sollwert bestimmt, die einer Reglervorrichtung als Eingangsgrößen zugeführt werden, welche den entsprechenden Vordruck-Sollwert in dem hydraulischen Druckraum einregelt.

In der WO 2012/010475 A1 wird vorgeschlagen, dass während der Antiblockierregelung der Druck in dem hydraulischen Druckraum der Druckbereitstellungseinrichtung dem jeweils größten Rad-Solldruck der Radbremsen entspricht, wobei zumindest eine Radbremse mit dem größten Rad-Solldruck im Sinne eines vollständigen Druckausgleichs zwischen Radbremse und Druckraum mit dem hydraulischen Druckraum über das geöffnete Einlassventil verbunden ist. Mittels einer reinen Druckregelung wird der Systemdruck der Druckbereitstellungseinrichtung auf den größten Rad-Solldruck eingeregelt.

Die in der WO 2012/010475 A1 sowie der DE 10 2011 076 675 A1 beschriebene Druckregelung des System-/Vordrucks der Druckbereitstellungseinrichtung besitzt unter anderem den Nachteil, dass es im Falle eines gewünschten Druckaufbaus an einer Radbremse bei einem Öffnen des zugehörigen Einlassventils dieser Radbremse zu einem unerwünschten, kurzzeitigen Abfall des System-/Vordrucks und damit zu einem unerwünschten Druckabbau an einer anderen Radbremse kommen kann, bevor der System- bzw. Vordruckabfall durch die Druckregelung wieder ausgeglichen werden kann. Eine präzise und stabile Druckeinstellung an den Radbremsen ist somit nicht immer gewährleistet.

Es ist daher Aufgabe der vorliegenden Erfindung, ein Verfahren zum Betrieb einer elektrohydraulischen Bremsanlage für Kraftfahrzeuge sowie eine Bremsanlage bereitzustellen, welches/welche eine verbesserte, radindividuelle Druckeinstellung an den Radbremsen ermöglicht. Dabei soll die Druckeinstellung an den Radbremsen möglichst exakt, aber auch komfortabel sein.

Diese Aufgabe wird erfindungsgemäß durch ein Verfahren gemäß Anspruch 1 und eine Bremsanlage gemäß Anspruch 13 gelöst.

Der Erfindung liegt der Gedanke zugrunde, dass anstelle der Druckregelung des Bremssystemdrucks zeitweise eine Steuerung des von der Druckbereitstellungseinrichtung abgegebenen Druckmittelvolumens durchgeführt wird. Dabei wird eine Umschaltung von der Druckregelung auf die Steuerung des Druckmittelvolumens in Abhängigkeit von den für die Radbremsen vorgegebenen Rad-Solldrücken durchgeführt. Hierdurch kann in Abhängigkeit der gewünschten Modulationssituation der Radbremsdrücke eine präzise Einstellung der Radbremsdrücke, insbesondere ohne einen unerwünschten Abfall eines Radbremsdrucks, erreicht werden.

Bevorzugt wird während einer radindividuellen Bremsregelfunktion, d.h. wenn zumindest teilweise unterschiedliche Rad-Solldrücke an den Radbremsen eingestellt werden sollen, zeitweise anstelle der Druckregelung des Bremssystemdrucks eine Steuerung des von der Druckbereitstellungseinrichtung abgegebenen Druckmittelvolumens durchgeführt.

Bevorzugt wird bei der Druckregelung des Bremssystemdrucks der Bremssystemdruck auf den Größten der Rad-Solldrücke einstellt oder auf einen um einen vorgegebenen Betrag über dem größten Rad-Solldruck liegenden Solldruck.

Die Steuerung des Druckmittelvolumens wird bevorzugt durchgeführt bzw. es wird bevorzugt dann auf eine Steuerung des Druckmittelvolumens umgeschaltet, wenn an zumindest einer Radbremse eine radindividuelle Bremsdruckerhöhung durchzuführen ist.

Bevorzugt wird bei der Steuerung des Druckmittelvolumens der Kolben der Druckbereitstellungseinrichtung um einen Positionswert verschoben, so dass ein anhand der vorgegebenen Rad-Solldrücke bestimmtes Druckmittelvolumen in zumindest eine Radbremse verschoben wird. Mit anderen Worten ausgedrückt, bei der Steuerung des Druckmittelvolumens wird der Kolben der Druckbereitstellungseinrichtung um einen Positionswert verschoben, der anhand der vorgegebenen Rad-Solldrücke bestimmt wird. Hierdurch wird die Verschiebung des Kolbens sehr schnell, bereits bei der Anforderung eines Druckaufbaus, durchgeführt. Eine Regelabweichung des Bremssystemdrucks muss nicht erkannt werden.

Der Positionswert wird bevorzugt anhand zumindest einer für die Radbremse oder die Radbremsen vorgegebenen Druck-Volumen-Kennlinie bestimmt.

Im Falle einer Bremsdruckerhöhung an nur einer Radbremse wird bevorzugt anhand der für diese Radbremse vorgegebenen Druck-Volumen-Kennlinie und dem Rad-Solldruck dieser Radbremse ein für die Radbremse benötigtes Druckmittelvolumen bestimmt, aus welchem dann die Positionsänderung des Kolbens (Verschiebung des Kolbens) bestimmt wird.

Bei einer Bremsdruckerhöhung an zwei oder mehr Radbremsen gleichzeitig, wird der Positionswert bzw. die Positionsverschiebung bevorzugt anhand einer für diese Radbremsen benötigten Summe von Druckmittelvolumina der Radbremsen bestimmt. Besonders bevorzugt wird für jede Radbremse, an welcher eine Bremsdruckerhöhung durchgeführt werden soll, ein benötigtes Druckmittelvolumen der Radbremse anhand der für diese Radbremse vorgegebenen Druck-Volumen-Kennlinie und dem Rad-Solldruck dieser Radbremse bestimmt, und die benötigten Druckmittelvolumina der zwei oder mehr Radbremse werden addiert.

Bei einer Bremsdruckerhöhung an zwei oder mehr Radbremsen wird eine radindividuelle Bremsdruckerhöhung an diesen Radbremsen bevorzugt durch eine geeignete Wahl radindividueller Öffnungsdauern für die entsprechenden Einlassventile durchgeführt. Besonders bevorzugt werden dabei die Einlassventile zum gleichen Zeitpunkt geöffnet. Alternativ ist es besonders bevorzugt, dass die Einlassventile zeitlich versetzt geöffnet werden. Bei zeitlichem Versatz ist die Sicherheit für eine exakte Umsetzung der gewünschten Solldrücke größer.

Der Öffnungszeitpunkt der Einlassventile ist bevorzugt mit dem Verschieben des Kolbens zeitlich korreliert. Besonders bevorzugt werden der Öffnungszeitpunkt der Einlassventile und der Start des Verschiebens des Kolbens gleichzeitig gewählt.

Gemäß einer Weiterbildung des erfindungsgemäßen Verfahrens wird nach Ablauf einer Phase der Steuerung des Druckmittelvolumens eine Phase der Druckregelung des Bremssystemdrucks durchgeführt. Hierdurch können eventuelle Druckabweichungen aufgrund von Ungenauigkeiten des bei der Steuerung herangezogenen Modells ausgeregelt werden. Insbesondere wird eine Druckregelungsphase auch dann durchgeführt, wenn keine weitere Änderung der Bremsdrück durchgeführt werden soll.

Bevorzugt wird von der Steuerung des Druckmittelvolumens auf die Druckregelung des Bremssystemdrucks zurückgeschaltet, wenn für jede der Radbremsen entweder ein Halten oder ein Abbau des Bremsdrucks durchgeführt werden soll.

Zu Beginn der Druckregelphase wird bevorzugt eine Abweichung von gemessenem und vorgegebenem Bremssystemdruck bestimmt. Anhand der Abweichung wird eine Korrektur eines Modells zur Steuerung des Druckmittelvolumens durchgeführt.

Anhand der Abweichung und einer Druck-Volumen-Kennlinie wird gemäß einer bevorzugten Ausführungsform des erfindungsgemäßen Verfahrens ein Korrekturfaktor bestimmt. Der Korrekturfaktor wird vorteilhafterweise für jede Radbremse getrennt, also radindividuell bestimmt. Ebenso ist es besonders bevorzugt, dass der Korrekturfaktor in Abhängigkeit von dem Radbremsdruck bestimmt wird, d.h. dass für verschiedene Radbremsdruckbereiche jeweils ein Korrekturfaktor bestimmt wird.

Bevorzugt wird anhand des Korrekturfaktors ein korrigiertes Druckmittelvolumen für eine Radbremse für eine nachfolgende Phase einer Steuerung des Druckmittelvolumens bestimmt.

Die Erfindung betrifft auch eine Bremsanlage für Kraftfahrzeuge in deren elektronischen Steuer- und Regeleinheit ein erfindungsgemäßes Verfahren durchgeführt wird.

Bevorzugt wird das erfindungsgemäße Verfahren in einer Bremsanlage für Kraftfahrzeuge durchgeführt, die in einer sog. "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Ebenso ist es bevorzugt, dass der hydraulische Druckraum der Zylinder-Kolben-Anordnung mit dem Druckmittelvorratsbehälter verbunden oder verbindbar ist.

Weitere bevorzugte Ausführungsformen der Erfindung ergeben sich aus den Unteransprüchen und der nachfolgenden Beschreibung anhand von Figuren.

Es zeigen:

Fig. 1    ein schematisches Prinzipschaltbild einer beispielsgemäßen Bremsanlage zur Durchführung eines erfindungsgemäßen Verfahrens,

Fig. 2    eine Schemadarstellung eines beispielsgemäßen Verfahrens,

Fig. 3    eine beispielhafte Druck-Volumen-Kennlinie einer Radbremse,

Fig. 4    einen Ausschnitt der Bremsanlage aus Fig. 1,

Fig. 5     beispielsgemäße zeitliche Druck- und Volumenbedarf-Verläufe von Radbremsen während einer ABS-Regelbremsung,

Fig. 6     einen Ausschnitt der Fig. 5 mit einem Vergleich von Radbremsdruck-Verläufen bei Druckregelung oder Volumensteuerung, und

Fig. 7     einen Ausschnitt der Fig. 5 mit Radbremsdruck-Verläufen zur Erläuterung eines beispielsgemäßen Korrekturverfahrens.

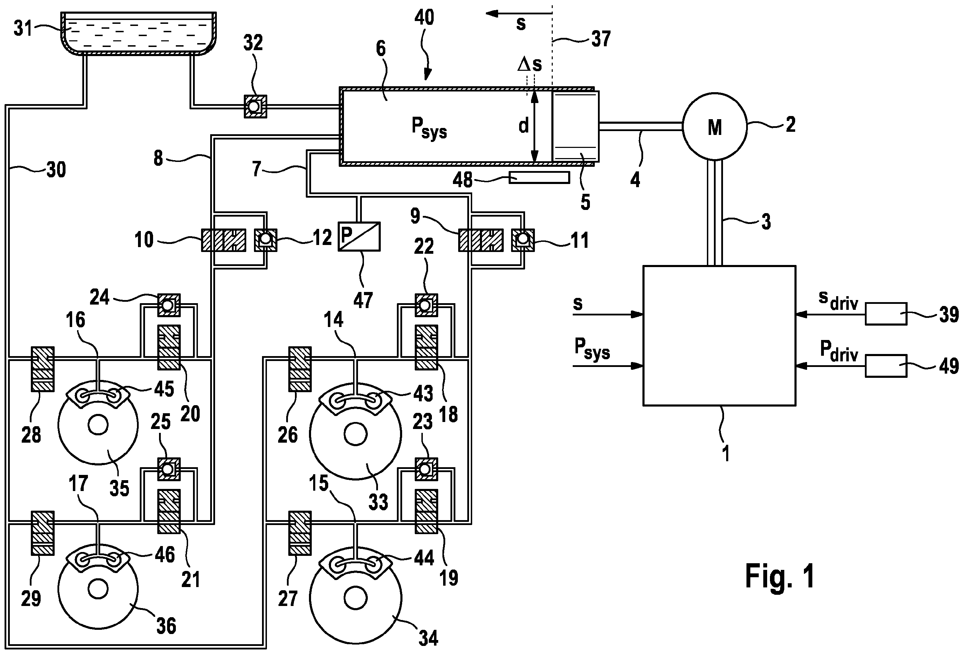

Fig. 1 zeigt ein Prinzipschaltbild einer beispielsgemäßen elektrohydraulischen Bremsanlage für Kraftfahrzeuge zur Durchführung eines erfindungsgemäßen Verfahrens. Die Bremsanlage umfasst beispielsgemäß vier hydraulisch betätigbare Radbremsen 43, 44, 45, 46, wobei beispielhaft von einer zweikreisigen Bremsenausführung mit achsweiser Kreisaufteilung (Schwarz-/Weiß-Aufteilung) ausgegangen wird, d.h. die Radbremsen 43, 44 sind den Vorderrädern 33, 34 und die Radbremsen 45, 46 sind den Hinterrädern 35, 36 zugeordnet.

Die Bremsanlage umfasst eine elektrisch steuerbare Druckbereitstellungseinrichtung 40, wobei jede Radbremse 43, 44, 45, 46 über ein Einlassventil 18, 19, 20, 21 mit der Druckbereitstellungseinrichtung 40 trennbar verbunden ist. Weiterhin ist beispielsgemäß jede Radbremse 43, 44, 45, 46 über ein Auslassventil 26, 27, 28, 29 mit einem Druckmittelvorratsbehälter 31 verbunden bzw. verbindbar. Allen Einlassventilen 18-21 ist beispielsgemäß jeweils ein in Richtung der Druckraums 6 öffnendes Rückschlagventil 22, 23, 24, 25 parallel geschaltet, damit ein Raddruckniveau nie über dem Niveau des zentralen Druckraums liegen kann, solange die Zuschaltventile 9 und 10 geöffnet sind. Druckbereitstellungseinrichtung 40 umfasst eine Zylinder-Kolben-Anordnung mit einem hydraulischen Druckraum 6, deren (Tauch)Kolben 5 durch einen elektromechanischen Aktuator aus einem Elektromotor 2 und einem geeigneten Getriebe 4 (z.B. einem Rotations-Translations-Getriebe oder einem Rotations-Rotations-Getriebe mit nachgeschaltetem Rotations-Translations-Getriebe) verschiebbar ist.

Bei der hier beispielhaft gezeigten zweikreisigen Bremsanlage ist für die Radbremskreise 14, 15 der Vorderräder 33, 34 eine Druckmittelversorgung umfassend eine Leitung 7 mit einem Zuschaltventil 9 sowie für die Radbremskreise 16, 17 der Hinterräder 35, 36 eine getrennte Druckmittelversorgung umfassend eine Leitung 8 mit einem Zuschaltventil 10 vorgesehen. Die Zweikreisigkeit des Systems ist aus Sicherheitsgründen vorteilhaft, jedoch für die Erfindung nicht wesentlich. Es wäre z.B. ebenso möglich, dass die Radbremskreise 14-17 über einen gemeinsamen Leitungsabschnitt mit dem Druckraum 6 verbunden sind. In einer weiteren Variante der Bremsanlage können die Leitungen 7 und 8 auch jeweils an diagonal gegenüberliegende Radbremsen (jeweils ein Vorderrad und das diagonal dazu angeordnete Hinterrad) angeschlossen sein.

Die beispielsgemäße Bremsanlage umfasst eine Erfassungseinrichtung 47 zur Bestimmung des Bremssystemdrucks $P_{sys}$ der Druckbereitstellungseinrichtung 40, z.B. in Form eines Drucksensors.

Weiterhin ist eine Erfassungseinrichtung 48 zur Bestimmung einer Position der Druckbereitstellungseinrichtung vorgesehen. Bei der Position kann es sich z.B. um die Lage/Position s des Kolbens 5 oder um eine Position des Aktuators 2, 4, z.B. die Rotorlage des Elektromotors 2, handeln.

Außerdem ist eine elektronische Steuer- und Regeleinheit 1 zur Ansteuerung des elektromechanischen Aktuators 2 und der Ventile 9, 10, 18-21, 26-29 der Bremsanlage vorgesehen. Steuer- und Regeleinheit 1 ist zur Ansteuerung des elektromechanischen Aktuators beispielsgemäß über Stromleitungen 3 mit Elektromotor 2 verbunden. Die Informationen über die mittels der Erfassungseinrichtung 48 bestimmten Position s der Druckbereitstellungseinrichtung und den mittels der Erfassungseinrichtung 47 bestimmten Bremssystemdruck $P_{sys}$ der Druckbereitstellungseinrichtung werden den Steuer- und Regeleinheit 1 zugeführt.

Bei der dargestellten Bremsanlage stellt der Fahrer mittels einer Bremspedalbetätigung eine Druckanforderung. Die Bremspedalbetätigung wird mittels geeigneter Sensoren 39, 49 gemessen, welche z.B. einen Bremspedalweg $S_{driv}$ und einen Betätigungsdruck (oder eine Betätigungskraft) $P_{driv}$ erfassen, und die Informationen $S_{driv}$, $P_{driv}$ der Steuer- und Regeleinheit 1 zugeführt. Von der Steuer- und Regeleinheit 1 wird eine entsprechende Druckanforderung für die Druckbereitstellungseinrichtung (Sollwert für den Bremssystemdruck) ermittelt und mit Hilfe von Aktuator 2, 4 und Tauchkolben 5 in dem hydraulischen Druckraum 6 umgesetzt, indem der Kolben 5 um einen Weg s aus seiner Ruheposition 37 fährt, sodass ein bestimmtes Volumen des Druckmittels aus Druckraum 6 über die Leitungen 7, 8, die geöffneten Zuschaltventile 9, 10 und die zunächst geöffneten Einlassventile 18-21 in die Radbremskreise 14-17 verschoben wird. Damit wird in den Radbremsen 43-46 ein entsprechender Bremsdruck erzeugt.

Ein Bremsdruckabbau an allen Radbremsen 43-46 kann erfolgen, indem der Kolben 5 wieder in Richtung der Ruheposition 37 zurückgefahren wird. Ein schneller und radindividueller Bremsdruckabbau, wie er im Falle einer ABS-Regelung benötigt wird, läuft vorteilhafterweise über die Ventilkombination aus Einlass- und Auslassventil ab, indem für das Beispiel der Radbremse 43 das Einlassventil 18 geschlossen und das Auslassventil 26 für eine bestimmte Zeit geöffnet wird. Dann strömt Druckmittel aus der Radbremse 43 durch das Auslassventil 26 und somit über die Leitung 30 in den Druckmittelbehälter 31. Ein Zurückziehen des Kolbens 5 würde den Druck in allen Radbremskreisen 14-17 gleichermaßen reduzieren, auch wenn man beispielsweise das Einlassventil 19 schließen würde, um den Druck im Radbremskreis 15 zu halten. Der Druckmittelrückstrom würde dann vollständig über das Rückschlagventil 23 laufen, welches das Einlassventil 19 überbrückt.

Beispielsgemäß ist der Druckraum 6 der Druckbereitstellungseinrichtung 40 über eine Leitung mit einem Rückschlagventil 32 mit dem Druckmittelbehälter 31 verbunden, so dass der Druckraum 6 über das Rückschlagventil 32 beim Zurückfahren des Kolbens 5 mit Druckmittelvolumen versorgt werden kann, falls zuvor Druckmittelvolumen über eines der Auslassventile 26-29 in den Behälter 31 entlassen wurde.

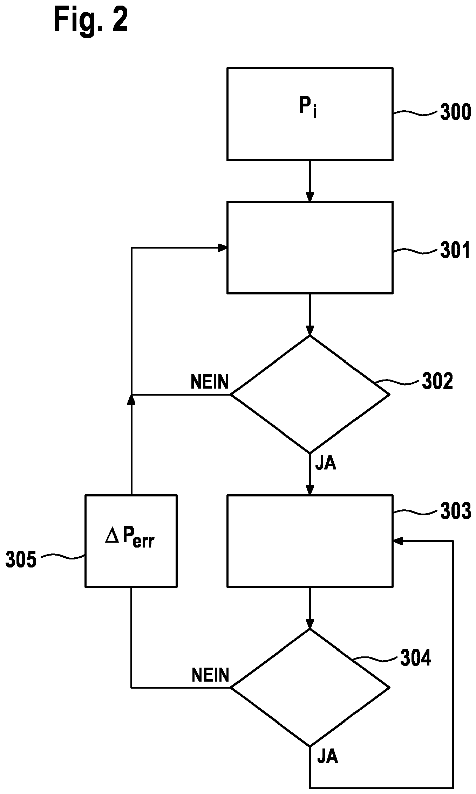

Fig. 2 zeigt eine Schemadarstellung eines beispielsgemäßen Verfahrens zur Einstellung eines geeigneten Bremssystemdruckverlaufs in dem zentralen Druckraum 6 der Druckbereitstellungseinrichtung 40. In einer Bremsregelfunktion (in Fig. 2 nicht dargestellt), z.B. einer Radschlupfregelung (z.B. ABS (Antiblockiersystem)) oder einer Fahrdynamikregelung (z.B. ESC (Electronic Stability Control)), wird für jede Radbremse (z.B. Radbremsen 43, 44, 45, 46 der Fig. 1) ein radindividueller Rad-Solldruck $p_i$ (z.B. mit i = 43, 44, 45, 46) bestimmt. Die vorgegebenen, radindividuellen Rad-Solldrücke $p_i$ stehen dann für das beispielsgemäße Verfahren zur Verfügung (Block 300).

In Block 301 wird eine Bremssystemdruckregelung, d.h. eine Regelung des Bremssystemdrucks $P_{sys}$ der Druckbereitstellungseinrichtung, durchgeführt. Hierzu wird aus den radindividuellen Rad-Solldrücken $p_i$ ein geeigneter Sollwert für den Bremssystemdruck bestimmt und dieser eingeregelt. Hierzu wird z.B. ein Druckregler herangezogen, mittels welchem der gemessene Bremssystemdruck $P_{sys}$ (Istwert) durch eine entsprechende Positionierung des Kolbens 5 auf den Sollwert eingeregelt wird. Der Sollwert für den Bremssystemdruck entspricht vorteilhafterweise der höchsten Druckanforderung aller Radbremskreise, also dem größten Rad-Solldruck. Um die Radbremse mit dem größten Rad-Solldruck sicher mit ausreichend Druck zu versorgen, kann alternativ der Sollwert für den Bremssystemdruck immer um einen vorgegebenen Betrag ($\Delta$) über dem größten Rad-Solldruck liegenden gewählt werden, d.h. der Sollwert für den Bremssystemdruck entspricht dem größten Rad-Solldruck plus den vorgegebenen Betrag $\Delta$.

Wird in Block 302 anhand der vorgegebenen Rad-Solldrücke $p_i$ eine vorgegebene Druckmodulationssituation der Radbremsen erkannt (JA in Block 302), so wird anstelle der Regelung des Bremssystemdrucks (siehe Block 301) in Block 303 eine Steuerung des von der Druckbereitstellungseinrichtung abgegebenen oder aufgenommenen Druckmittelvolumens (Volumensteuerung) durchgeführt. Das heißt, es wird eine Umschaltung von der Regelung des Bremssystemdrucks (Block 301) auf die Steuerung des Druckmittelvolumens (Block 303) in Abhängigkeit von den für die Radbremsen vorgegebenen Rad-Solldrücken $p_i$ durchgeführt.

Vorteilhafterweise wird auf den Steuermodus umgeschaltet, wenn mindestens ein Radbremskreis eine individuelle Bremsdruckerhöhung anfordert.

Im Steuermodus (Block 303) wird der Tauchkolben 5 dann jeweils um einen Positionswert $\Delta s$ verschoben, der das für den Druckaufbau an der oder den Radbremsen notwendige Druckmittelvolumen $\Delta V$ in die Radbremse oder Radbremsen schiebt, welche die Anforderung zum Druckaufbau gestellt hat bzw. haben.

Im Falle, dass nur an einer einzigen Radbremse ein Bremsdruckaufbau durchgeführt werden soll, wird der Positionswert $\Delta s$, um den der Kolben 5 im Falle der Volumen (vor) steuerung verschoben wird, bevorzugt anhand einer vorgegebenen Druck-Volumen-Kennlinie der Radbremse ermittelt, die den individuellen Druckaufbau benötigt. Dabei wird zur Berechnung der Einfachheit wegen besonders bevorzugt die Gleichung $\Delta s = \Delta V/A$ benutzt. Hierbei ist $\Delta V$ das von der Radbremse benötigte Volumen, welches anhand der vorgegebenen Druck-Volumen-Kennlinie bestimmt wird, und A die Fläche des Tauchkolbens 5, z.B. $A=\pi^* (d/2)^2$ im Falle eines zylindrischen Tauchkolbens mit d: Durchmesser des Tauchkolbens.

Bevorzugt wird für den Fall, dass an mehreren Radbremsen j gleichzeitig (in einem Zeitschritt der Steuerung) Bremsdruck erhöht werden soll, der Positionswert $\Delta s$, um den der Kolben 5 verschoben wird, anhand des benötigten Summenvolumens $\Delta V_{sum}$ all dieser Radbremsen j berechnet (d.h. $\Delta V_{sum}$ ist die Summe der Einzelvolumina $\Delta V_j$ über die Radbremsen j). Das von einer Radbremse j benötigte Volumen $\Delta V_j$ wird anhand einer vorgegebenen Druck-Volumen-Kennlinie bestimmt. Dabei kann dieselbe Druck-Volumen-Kennlinie für alle Radbremsen vorgegeben sein oder es können radbremsenindividuelle Druck-Volumen-Kennlinien vorgegeben werden. Der jeweilige, (radbrems)individuelle Druckaufbau erfolgt besonders bevorzugt durch Einstellen einer geeigneten Aktivierungsdauer zum Öffnen des der jeweiligen Radbremse zugeordneten Einlassventils, wobei der Aktivierungszeitpunkt (Start der Aktivierung) aller betroffenen Einlassventile gleich ist und so gewählt wird, dass die Ventilöffnung mit dem Verschieben des Tauchkolbens 5 zeitlich korreliert.

Alternativ wird für den Fall, dass an mehreren Radbremsen gleichzeitig (in einem Zeitschritt der Steuerung) Bremsdruck erhöht werden muss, bevorzugt prinzipiell wie im vorherigen Absatz beschrieben vorgegangen, wobei im Unterschied aber die Aktivierungszeitpunkte (Start der Aktivierung) für die betroffenen Einlassventile zeitlich versetzt gewählt werden.

Liegt die vorgegebene Druckmodulationssituation, welche die Umschaltung in die Volumensteuerung ausgelöst hat, nicht mehr vor oder liegt eine zweite vorgegebene Druckmodulationssituation vor (in beiden Fällen NEIN in Block 304), so wird wieder auf eine Regelung des Bremssystemdrucks (Block 301) umgeschaltet.

Vorteilhafterweise wird auf die Bremssystemdruckregelung zurückgeschaltet, wenn alle Radbremsen auf unverändertem Druckniveaus zu halten sind oder einen individuellen Druckabbau (über ihre Auslassventile) anfordern. Z.B. wird auf die Bremssystemdruckregelung umgeschaltet, wenn zwei Radbremsen ein Druckhalten und zwei Radbremsen einen Druckabbau anfordern.

Beispielsgemäß wird direkt nach Ablauf des Volumensteuermodus, d.h. unmittelbar zu Beginn einer anschließenden Druckregelphase, in Block 305 eine Abweichung $\Delta P_{err}$ (Differenz) des gemessenen Bremssystemdrucks $P_{sys}$ von einem Solldruck für den Bremssystemdruck ermittelt. Dazu wird bevorzugt der Solldruck als das Maximum aller angeforderten Radbremsdrücke $p_i$ gewählt. Die Abweichung $\Delta P_{err}$ wird dazu benutzt, um eine Modellkorrektur für die (nächste) Steuerungsphase durchzuführen.

Die Modellkorrektur wird beispielgemäß anhand der folgenden Schritte ausgeführt:

a) Ein notwendiger Korrekturfaktor $K_{mod}$ wird grundsätzlich nur dann bestimmt, wenn Druck an einer einzelnen Radbremse aufgebaut wurde und ein vorgegebenes Mindestzeitintervall (von z.B. 10ms) danach auftritt, in dem keine andere Radbremse einen Druckaufbau fordert.

b) Eine unmittelbar nach dem Druckaufbau feststellbare Systemdruckabweichung $\Delta P_{err}$ wird benutzt, um einen Volumenfehler $\Delta V_{err}$ anhand der Druck-Volumen-Kennlinie des Rades mit dem höchsten Bremsdruck zu ermitteln.

c) Aus dem Volumenfehler $\Delta V_{err}$ wird ein Korrekturfaktor gemäß $K_{mod} = (1 + (\Delta V_{err}/(n*\Delta V)))$ gebildet (mit n=1 oder 2).

d) Für jede Radbremse i wird eine eigene Tabelle mit Korrekturfaktoren $K_{mod,i}$ für verschiedene Druckbereiche (z.B. für 0-10bar, 10-20bar, 20-35bar, 35-50bar, 50-70bar, 70-100bar und 100-200bar) angelegt (z.B. in der Steuer- und Regeleinheit 1). Vorteilhafterweise wird dabei ein für einen Druckbereich neu ermittelter Korrekturfaktor auf dem entsprechenden Tabellenplatz abgelegt oder mit einem dort bereits vorhandenen Korrekturfaktor multipliziert und dann abgelegt.

e) Wird an einer Radbremse ein individueller Druckaufbau durchgeführt, so wird zunächst das dazu notwendige Volumen $\Delta V$ bestimmt. Dann wird das aktuelle Druckniveau P (d.h. der gemessene Bremssystemdruck $P_{sys}$) dazu verwendet, den entsprechenden Tabellenplatz in der Korrekturtabelle für dieses Rad zu bestimmen. Wenn dort ein Korrekturfaktor $K_{mod}$ abgelegt ist, so wird ein korrigierter Volumenbedarf nach der Gleichung $\Delta V_{korr} = K_{mod} * \Delta V$ bestimmt.

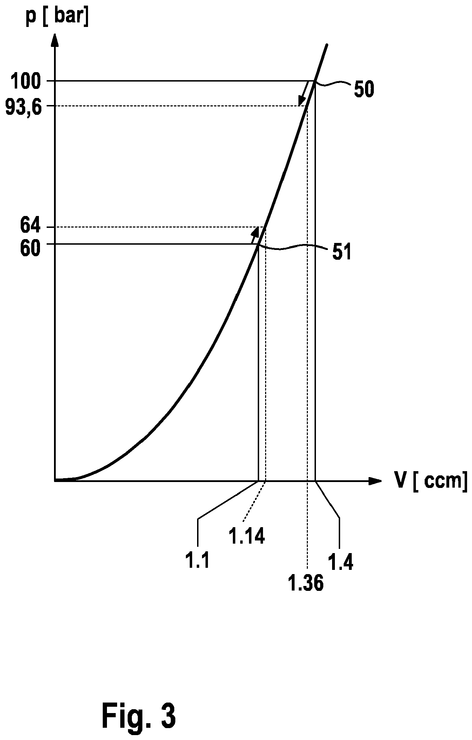

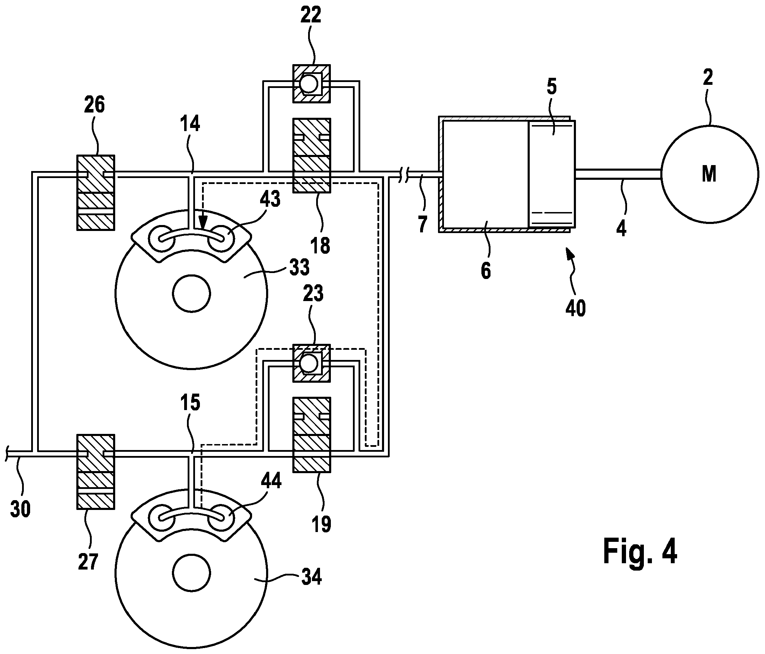

Im Folgenden werden anhand der Fig. 1, 3 und 4 einige Nachteile bzw. Probleme, welche sich bei einer ausschließlichen Bremssystemdruckregelung ergeben, erläutert. Dabei zeigt Fig. 3 eine typische Druck-Volumen-Kennlinie einer Radbremse und veranschaulicht ein Volumenflussproblem, welches in der Bremsanlage nach Fig. 1 bei einer ausschließlichen Bremssystemdruckregelung auftreten kann, wenn Druck in einem Rad aufzubauen ist, dessen bisheriges Druckniveau unter dem eingestellten Bremssystemdruck des Druckraums 6 liegt. Das hydraulische Teilsystem in Fig. 4 erklärt dieses Problem auf Hydraulikebene.

Aus technischen Gründen ist es vorteilhaft, dass die Steifigkeit des Druckraums 6 verglichen mit der Steifigkeit der Radbremsen 14-17 sehr hoch ist. Dies ermöglicht vor allem einen schnellen Radbremsdruckaufbau im Falle einer Notbremsung. Wenn der Raum 6 selbst eine hohe Elastizität (geringe Steifigkeit) aufweisen würde, so müsste der Elektromotor 2 nicht nur zum Befüllen der Radbremsen eine Drehbewegung ausführen, sondern es wäre ein zusätzlicher Drehwinkel notwendig, um den Raum 6 zu expandieren.

Die geforderte hohe Steifigkeit des Raums 6 hat aber aus regelungstechnischer Sicht auch einige Nachteile. Zum einen ist es schwierig, den Bremssystemdruck $P_{sys}$ schnell und präzise einzustellen, wenn die Einlassventile 18-21, z.B. während einer ABS-Regelung der vier Räder, gleichzeitig geschlossen sind. Daher wird in der DE 10 2011 077 329 A1 vorgeschlagen, auch während einer ABS-Regelung möglichst immer das Einlassventil der Radbremse mit dem höchsten Bremsdruck offen zu halten und den Bremssystemdruck genau auf das Niveau dieser Radbremse einzuregeln, auch wenn der Fahrer einen höheren Bremsdruck anfordert. Bei diesem Regelprinzip ist der steife Raum 6 also immer mit mindestens einer Radbremse, also einem weichen Verbraucher verbunden. Damit ist es möglich, den Bremssystemdruck $P_{sys}$ stabil (ohne Schwingungen) einzustellen.

Ein weiterer Nachteil der hohen Steifigkeit des Raums 6 besteht aber in der sehr geringen Volumenkapazität des Druckraums 6. Wenn beispielsweise ein Rad mit einem Druck unterhalb des Bremssystemdrucks $P_{sys}$ durch Öffnen des zugehörigen Einlassventils zugeschaltet wird, um eine Erhöhung des Raddrucks zu erzielen, so bricht der Bremssystemdruck zunächst zusammen, da das für den Druckaufbau notwendige Druckmittelvolumen nicht so schnell aus dem steifen Druckraum 6 geliefert werden kann.

Diesen Zusammenhang soll die nachfolgende Bilanzrechnung an einem Beispiel verdeutlichen. Es wird angenommen, dass in dem Druckraum 6 ein Bremssystemdruck $P_{sys}$ von 100bar eingestellt ist, der genau dem aktuellen Bremsdruck $p_{fr,act}$ an Radbremse 44 (z.B. rechtes Vorderrad) entspricht. Das Einlassventil 19 dieser Radbremse wird also offen betrieben. Die Radbremse 43 (z.B. linkes Vorderrad) liegt auf einem Druckniveau $p_{fl,act}$ von 60bar und benötigt eine Erhöhung um $\Delta p_{fl,req}$ (z.B. 4 bar) auf den gewünschten Endwert $p_{fl,req} = p_{fl,act} + \Delta p_{fl,req} = 64$ bar. Diese Verhältnisse sind in Fig. 3 veranschaulicht. Fig. 3 zeigt eine beispielhafte Druck-Volumen-Kennlinie einer Radbremse, wie sie hier beispielsgemäß für die Vorderradbremsen 43, 44 angenommen wird. Die Kennlinie veranschaulicht, dass mit wachsendem Druckmittelvolumen V (in Kubikzentimeter, ccm) der Bremsdruck p (in bar) in der Radbremse kontinuierlich und leicht progressiv ansteigt, da die Radbremse mit wachsendem Druckmittelvolumen steifer wird, die Elastizität also abnimmt. Radbremse 44 befindet sich im Arbeitspunkt 50, hat also 100bar Bremsdruck bei einem aufgenommenen Druckmittelvolumen von 1.4ccm. Der Bremsdruck in Radbremse 43 liegt im Arbeitspunkt 51 auf 60bar bei einem Volumen von 1.1ccm und soll auf 64bar erhöht werden. Gemäß der Druck-Volumen-Kennlinie ist dazu ein Druckmittelvolumen von 1.14ccm notwendig, das aktuelle Volumen in Radbremse 43 muss also um 0.04ccm erhöht werden. Aus der Kenntnis des Bremssystemdrucks $P_{sys}$ von 100bar und dem Radbremsdruck von 60bar ergibt sich am Einlassventil 18 eine Druckdifferenz von 40bar. Über eine einfache, an sich bekannte Modellrechnung kann berechnet werden, wie lange das Einlassventil 18 geöffnet werden muss, um unter diesen Randbedingungen einen Druckanstieg von 4bar zu erzielen. Ein typischer Wert ist hier etwa 5ms (ms: Millisekunden). Wenn das Ventil 18 für diese berechnete Zeit geöffnet wird, strömt im Idealfall also ein zusätzliches Druckmittelvolumen von 0.04ccm in die Radbremse 43, wodurch die gewünschte Druckerhöhung um 4bar erzielt wird.

Wie oben bereits erläutert wurde, ist der Druckraum 6 im Idealfall unendlich steif, hat also keine Elastizität, aus der das Druckmittelvolumen geliefert werden kann. Der Kolben 5 müsste daher innerhalb der kurzen Öffnungszeit des Einlassventils 18 das benötigte Druckmittelvolumen nachschieben. Bei einer reinen (ausschließlichen) Druckregelung, die vorsieht, den Bremssystemdruck $P_{sys}$ auf dem gewünschten Niveau von beispielsgemäß 100bar zu halten, ist dies jedoch technisch nicht realisierbar, da für die Bremssystemdruckregelung dieser kurzfristige, zusätzliche Volumenbedarf bei einer weiterhin konstanten Systemdruckanforderung als Störgröße wirkt, auf deren Auswirkung mit einer entsprechenden Stellgröße reagiert wird. Der Regler müsste dazu innerhalb der kurzen Ventilöffnungszeit von beispielsweise 5ms erfassen, dass der Bremssystemdruck $P_{sys}$ unter das gewünschte Niveau von 100bar zusammenbricht, und müsste dann den Elektromotor 2 derart ansteuern, dass der Bremssystemdruck wieder exakt auf das Niveau von 100bar eingeregelt wird. Aufgrund der endlichen Abtastzeiten beim Messen von Druckwerten (für Istwert des Bremssystemdrucks), aber auch insbesondere aufgrund der Verzugszeiten bei der Stromeinspeisung und durch Massenträgheiten des Aktuators (Motor 2, Getriebe 4) kann eine Druckausregelung innerhalb von Zeitintervallen unter 20ms kaum erfolgen.

Das Druckmittelvolumen, welches beim Druckaufbau in die Radbremse 43 strömt, wird daher zumindest temporär einer anderen Druckmittelquelle als dem Druckraum 6 entnommen. Diesen Vorgang veranschaulicht Fig. 4, welche einen Ausschnitt der Bremsanlage aus Fig. 1 zeigt, in dem aus Gründen der Einfachheit nur die beiden Vorderradbremskreise 14, 15 mit ihren radindividuellen Einlass-und Auslassventilen und die Druckbereitstellungseinrichtung 40 dargestellt ist. Da die Druckbereitstellungseinrichtung 40 das benötigte Druckmittelvolumen für die Radbremse 43 nicht so schnell liefern kann, wird das Druckmittelvolumen aus dem ebenfalls mit hohem Druck beaufschlagten Radbremskreis 15 (Radbremse 44) geliefert, der aufgrund seiner Elastizität auch über die erforderliche Kapazität verfügt. Im Extremfall eines unendlich steifen Druckraums 6 mit Elastizität Null würde das gesamte Volumen von 0.04ccm der Radbremse 44 entnommen. Der entsprechende Weg des Druckmittelvolumenstroms ist in Fig. 4 mit dem gestrichelten Pfeil dargestellt. Selbst wenn das Einlassventil 19 geschlossen würde, um diesen sog. Crossflow zu verhindern, würde dieser - wie dargestellt - über das in dieser Richtung offene Rückschlagventil 23 stattfinden, das oftmals einen deutlich größeren Querschnitt hat als die Blende im Einlassventil 19. Der Druckmittelvolumenaustausch von 15 nach 14 läuft daher sogar relativ schnell ab. Aufgrund dieses Effekts wird der gewünschte Druckaufbau in Radbremse 43 vollständig oder zumindest teilweise erzielt, allerdings mit der Folge eines unerwünschten Druckabbaus in Radbremse 44. Dies ist ebenfalls in Fig. 3 beispielhaft dargestellt. Entsprechend der Druck-Volumen-Kennlinie führt die Volumenentnahme von 0.04ccm aus der Radbremse 44 mit 100bar zu einem Druckabbau von 6.4bar auf 93. 6bar an Radbremse 44, da die Radbremse 44 im Arbeitspunkt 50 deutlich steifer ist, also eine kleinere Kapazität hat als die Radbremse 43 im Arbeitspunkt 51. Aufgrund der hydraulischen Verbindungen fällt auch der Bremssystemdruck $P_{sys}$ etwa auf den Wert von 93.6bar ab. In der Folgezeit würde der Druckregler diese Regelabweichung zu den gewünschten 100bar erkennen und ausregeln. Da der Radbremskreis 15 den höchsten der Radbremsdrücke aufweist und daher mit offenem Einlassventil 19 geregelt wird, würde das Druckmittelvolumen von Druckraum 6 dann direkt in den Radbremskreis 15 geschoben.

Die hier anhand von Fig. 3 und 4 vereinfacht dargestellten Abläufe stellen sich in der Realität mit vier Radbremskreisen noch komplexer, aber prinzipiell ähnlich dar. Die Radbremse, die nicht den höchsten Radbremsdruck hat und an der ein Druckaufbau durchgeführt werden soll, wird immer mehr oder weniger aus den anderen Radbremsen mit höheren Druckniveaus, aber auch zu einem geringen Anteil aus dem nicht unendlich steifen Druckraum 6, mit Druckmittelvolumenanteilen versorgt werden. Aufgrund der hydraulischen Widerstände der Zuschaltventile 9, 10 wird generell die Hochdruckradbremse im selben Bremskreis der Hauptlieferant für das kurzfristig benötigte Druckmittelvolumen sein, sodass vornehmlich deren Radbremsdruck in einer unerwünschten Weise zusammenbrechen kann. Bei einer ABS-Regelung dicht am physikalischen Optimum kann dieser Effekt also einen unzulässigen Leistungsverlust und aufgrund der Druckschwankungen auch eine vorzeitige Destabilisierung des Hochdruckrades mit sich bringen.

Um die genannten Nachteile zu beheben, wird daher erfindungsgemäß zeitweise anstelle der Regelung des Bremssystemdrucks eine Steuerung des Druckmittelvolumens der Druckbereitstellungseinrichtung durchgeführt, d.h. die Bremssystemdruckregelung wird zeitweise durch eine Volumensteuerung ersetzt. Es wird also ein kombiniertes Konzept durchgeführt, bestehend aus einer Systemdruckregelung und einer Volumensteuerung, wobei die beiden Prinzipien jeweils nur phasenweise und gegenseitig ausschließend - abhängig von der jeweiligen Druckmodulationssituation der Fahrzeugbremsen - aktiv sind.

Bevorzugt wird die Volumensteuerung immer dann aktiviert, wenn mindestens ein Radbremskreis einen individuellen Druckaufbau benötigt.

Bevorzugt wird auf die Systemdruckregelung umgeschaltet, wenn alle Räder auf unveränderten Druckniveaus zu halten sind oder einen individuellen Druckabbau über ihr jeweiliges Auslassventil 26-29 anfordern. Damit wird ein möglicher Fehler, der in einer Volumensteuerungs-Phase prinzipiell auftreten kann, direkt wieder durch eine anschließende Bremssystemdruckregelungs-Phase ausgeglichen. Es kann daher kein großer Regelungsfehler im Laufe eines längeren Betriebs der Anlage kumulieren (wie weiter unten noch detaillierter beschrieben wird).

Es hat sich gezeigt, dass eine reine, hochpräzise Steuerung der Druckbereitstellungeinrichtung nicht möglich ist. Dies kann darauf zurückgeführt werden, dass eine (Vor-)Steuerung dann vorteilhaft ist, wenn die Steuerung auf einer verlässlichen Modellbildung der Regelstrecke basiert. Für die Bremsdruckeinstellung bedeutet dies, dass im Wesentlichen gute Modelle für die Radbremsen, also exakte Druck-Volumen-Kennlinien für die jeweils verbauten Bremsen bekannt sein sollten. Da bei einer großen Anzahl von ausgerüsteten Fahrzeugen und der im Fahrbetrieb auftretenden Abnutzung und Alterung von Komponenten etc. immer mit einer Parameterstreuung gerechnet werden muss, ist eine reine Steuerung in diesem Bereich nicht sinnvoll möglich.

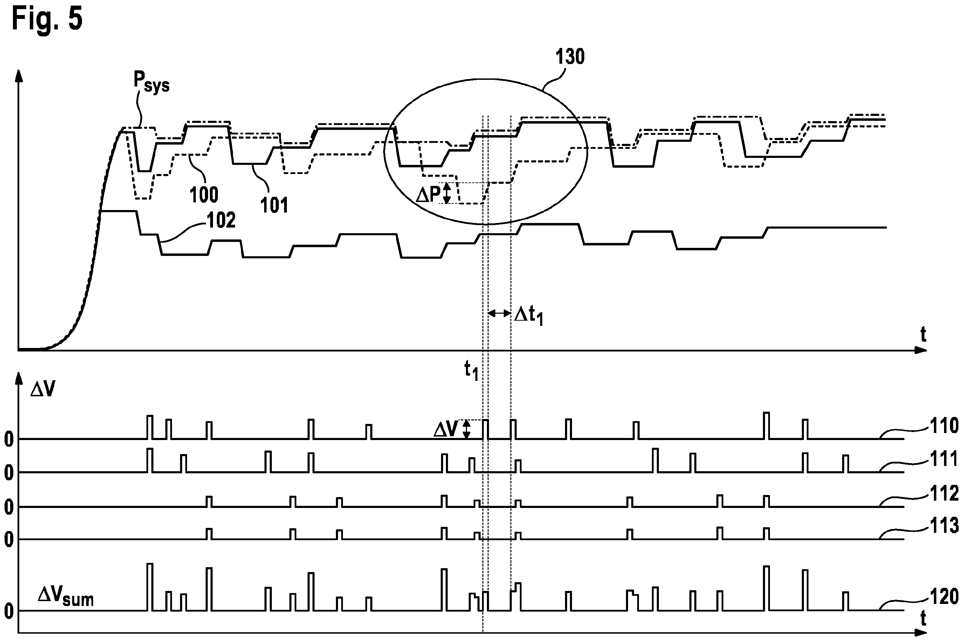

Zur Erläuterung eines beispielsgemäßen Verfahrens erfolgt im Folgenden eine Darstellung einer beispielsgemäßen Volumensteuerung. Dazu zeigt Fig. 5 ein typisches Beispiel für eine radindividuelle Druckmodulation, während einer Blockierschutz-Regelung (ABS) an den vier Fahrzeugrädern eines Kraftfahrzeugs. Im oberen Diagramm der Fig. 5 sind die zeitlichen Verläufe der Radbremsdrücke dargestellt. Dabei zeigt Signal 100 den Bremsdruck $p_{43}$ der linken Vorderradbremse, Signal 101 den Bremsdruck $p_{44}$ der rechten Vorderradbremse und Signal 102 den Bremsdruck $p_{45}$ ($p_{45} = p_{46}$) der beiden Hinterradbremsen. Es wird angenommen, dass die beiden Hinterradbremsen aus Fahrstabilitätsgründen zu jedem Zeitpunkt gleichermaßen mit dem Druck gebremst werden, den das jeweils am stärksten blockiergefährdete Hinterrad anfordert. Im oberen Diagramm der Fig. 5 ist weiterhin der zeitliche Verlauf des Signals des Bremssystemdrucks $P_{sys}$ dargestellt, also der in Druckraum 6 eingestellte Druck. Der Bremssystemdruck $P_{sys}$ liegt immer auf oder etwas über dem Druckniveau der Radbremse mit dem jeweils höchsten Druckbedarf.

Im unteren Diagramm der Fig. 5 ist der Druckmittelvolumenbedarf $\Delta V$ der Radbremsen (zusätzliches Druckmittelvolumen, mit dem der jeweilige Druckaufbau erreicht wird) während der laufenden ABS-Regelung über der Zeit t dargestellt. Dabei zeigt Signal 110 den Volumenbedarf $\Delta V_{43}$ der linken Vorderradbremse 43, Signal 111 den Volumenbedarf $\Delta b_{44}$ der rechten Vorderradbremse 44 und die Signale 112 und 113 die Volumenbedarfsanteile $\Delta V_{45}$ und $\Delta V_{46}$ der beiden Hinterradbremsen 45, 46. Signal 120 stellt den jeweiligen Summen-Volumenbedarf $\Delta V_{sum}$ der Radbremsen in einem Zeitschritt dar, der sich gemäß $\Delta V_{sum} = \Delta V_{43} + \Delta V_{44} + \Delta V_{45} + \Delta V_{46}$ ergibt. Der Volumenbedarf $\Delta V_j$ für eine Radbremse j wird aus der jeweils gewünschten Druckerhöhung an dieser Radbremse, bevorzugt anhand einer vorgegebenen Druck-Volumen-Kennlinie, berechnet. Dabei sind die gewünschten Druckerhöhungen der Radbremsen aus der Bremsregelfunktion bekannt. Jede Bremsregelfunktion, wie ABS oder TCS (Traktionskontrolle) oder ESC (Fahrstabilitätsregelung), erzeugt als Ausgangsgrößen radindividuelle Solldruckwerte (Rad-Solldrücke $p_i$), wie sie im oberen Diagramm gezeigt sind. Wird durch die Bremsregelfunktion eine Druckerhöhung $\Delta P$ in einem Zeitschritt gefordert, wie z.B. an der linken Vorderradbremse 43 zum Zeitpunkt $t_1$ (Signal 100), so wird anhand der für die Radbremse 43 vorgegebenen Druck-Volumen-Kennlinie (siehe auch Fig. 3) aus dem bekannten aktuellen Radbremsdruck (z.B. 60bar, Arbeitspunkt 51 auf der Kennlinie) und dem geforderten Druckaufbau $\Delta P$ der resultierende Volumenbedarf $\Delta V$ bestimmt. So wird in jedem Zeitschritt mit allen geregelten Rädern verfahren und dann der notwendige Gesamtvolumenbedarf $\Delta V_{sum}$ (Signal 120) gebildet.

Danach wird geprüft, ob der Gesamtvolumenbedarf $\Delta V_{sum}$ im aktuellen Zeitschritt größer als Null ist, also mindestens eine Radbremse einen Druckaufbau benötigt. In diesem Fall wird von der Bremssystemdruckregelung auf eine Volumensteuerung umgeschaltet. Die Steuer- und Regeleinheit 1 fährt dann sofort - ohne eine Überprüfung des dadurch temporär entstehenden Bremssystemdrucks $P_{sys}$ durchzuführen - von der gegenwärtigen Position s ausgehend den Kolben 5 um einen Weg $\Delta s$ vor (nach links in Fig. 1), wobei der Weg $\Delta s$ derart gewählt wird, dass der Kolben 5 das benötigte Summenvolumen $\Delta V_{sum}$ verschiebt. Der Weg $\Delta s$ wird z.B. nach der folgenden Gleichung (1)

$$\Delta s = \Delta V_{sum} / (\pi \ast (d/2)^2)$$

berechnet. Dabei stellt $(\pi \ast (d/2)^2)$ die Fläche des üblicherweise zylindrisch ausgeführten Kolbens 5 dar, mit Durchmesser d des Kolbens.

Es wird also basierend auf dem ermittelten Volumenbedarf die Systemdruckregelung zeitweise durch eine Volumensteuerung ersetzt, um die anhand von Fig.

3 und Fig. 4 erläuterten Probleme zu beheben.

Ein Vorteil der Volumensteuerung liegt darin, dass bereits aufgrund der Anforderung einer Druckerhöhung an einer oder mehreren Radbremsen eine Motorbewegung zwecks Volumenverschiebung in Gang gesetzt wird und nicht erst dann, wenn aufgrund der Messung des Bremssystemdruckes $P_{sys}$ ein Druckverlust registriert wird, wie es bei einer reinen Druckregelung geschehen würde.

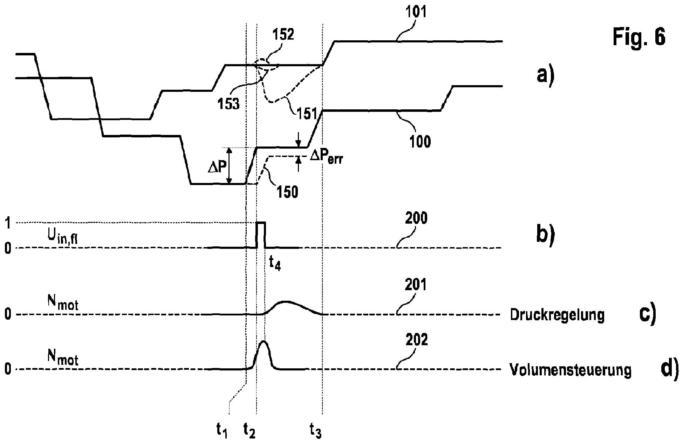

Die Volumenverschiebung läuft bevorzugt mit dem Öffnen des jeweiligen Einlassventils oder der Einlassventile (für den Fall, dass mehrere Radbremsen gleichzeitig eine Druckerhöhung anfordern) weitgehend synchron. Eine exakte zeitliche Korrelation beider Vorgänge (Kolbenbewegung und Ventilöffnung) ist wünschenswert, aber nicht unbedingt notwendig, wie die nachfolgende Betrachtung anhand von Fig. 6 zeigt.

In dem oberen Diagramm a) der Fig. 6 ist der in Fig. 5 mit 130 markierte Zeitbereich vergrößert dargestellt, wobei das Signal 100 für den idealen zeitlichen Druckverlauf an der linken Vorderradbremse 43 und das Signal 101 für den Druckverlauf an der rechten Vorderradbremse 44 dargestellt sind. Zum Zeitpunkt $t_1$ entscheidet die ABS-Reglung, dass der Druck an der linken Vorderradbremse 43 um eine Betrag $\Delta P$ erhöht werden soll. In dem Diagramm b) der Fig. 6 ist die Ansteuerung $U_{in,fl}$ (Signal 200) des Einlassventils 18 der linken Vorderradbremse 43 dargestellt. Die Ansteuerung $U_{in,fl}$ erfolgt vorteilhafterweise logisch und physikalisch zeitlich leicht versetzt (hier zum Zeitpunkt $t_2$). Wie bereits erläutert wurde, würde sich im Falle einer reinen (ausschließlichen) Druckregelung für den (Brems) Systemdruck $P_{sys}$ ein Druckausgleichsvorgang zwischen den beiden Vorderradbremsen einstellen. Abweichend von den gewünschten Druckverläufen 100 und 101 würde der Druckaufbau in der linken Vorderradbremse 43 in Realität gemäß dem dargestellten Signalverlauf 150 mit einem zeitlichen Versatz $t_2-t_1$ verlaufen, was normal und bereits im Regelalgorithmus (hier ABS) berücksichtigt ist.

Der ebenfalls bereits erläuterte, unerwünschte Effekt der Druckregelung besteht in dem Zusammenbruch des Bremsdrucks an der rechten Vorderradbremse 44, wie er in dem Signalverlauf 151 dargestellt ist, da sich ein Volumen-Umstrom (sog. Crossflow) vom rechten zum linken Radbremskreis einstellt, bevor Elektromotor 2 über den Kolben 5 den Effekt durch Nachregelung kompensieren kann. In dem Diagramm c) der Fig. 6 ist als Signal 201 die Motordrehzahl $N_{mot}$ des Elektromotors 2 im Falle einer Druckregelung dargestellt. Wie dem Signal 201 zu entnehmen ist, erfolgt die Nachregelung erst, nachdem der Bremsdruck der rechten Vorderradbremse (Signal 151, identisch mit $P_{sys}$) eingebrochen ist. Die Druckregelung muss zudem moderat (mit nicht zu hoher Kreisverstärkung) erfolgen, damit der gesamte Druckregelkreis nicht aufschwingt und damit instabil wird. Daher sind die Motordrehzahlen $N_{mot}$ im Falle der Regelung relativ gering (flacher Signalverlauf von 201).

Ein weiteres Problem der Regelung kann darin bestehen, dass die Druckerhöhung an der Niedrigdruckradbremse, d.h. hier in der linken Vorderradbremse, Signal 150) trotz korrekt bestimmter Ventilansteuerungszeit (siehe Signal 200) nicht um den exakt gewünschten Betrag erfolgt, sodass sich eine bleibende Abweichung $\Delta P_{err}$ einstellt (siehe Signal 100 und 150). Dies liegt an den hydraulischen Widerständen der zwischen den Radbremskreisen liegenden Ventile. Der mit hoher Kraft volumenverschiebende Kolben 5 wäre prinzipiell in der Lage, das Volumen auch gegen diese Widerstände in den Radbremskreis zu befördern, hat aber auf die Niedrigdruckradbremse selbst keinen Effekt mehr, da deren Einlassventil schon wieder geschlossen ist, bevor Kolben 5 Volumen nachschiebt. Dieses Volumen gelangt dann nur noch in den offenen Hochdruckbremskreis des rechten Vorderrades und sorgt dort für die verspätete Druckkorrektur (siehe Signal 151), die erst etwa zum Zeitpunkt $t_3$ beendet ist. In dem gezeigten Beispiel wird noch vor diesem Zeitpunkt $t_3$ eine erneute Druckerhöhung an der linken Vorderradbremse angefordert (Signal 100), die wiederum zu einem ähnlichen Druckeinbruch an der rechten Vorderradbremse führen würde (hier nicht dargestellt).

Das Beispiel macht die Probleme der reinen Druckregelung von $P_{sys}$ sichtbar. Die unerwünschten Regelabweichungen (Signalverläufe 150 und insbesondere 151) würden - wie schon erwähnt - zu spürbaren Verlusten an Komfort und Performance innerhalb einer ABS-Regelung führen.

Demgegenüber kann mit der Volumensteuerung eine wesentlich exaktere Druckmodulation erfolgen, wie ebenfalls in der Fig. 6 dargestellt ist. In dem Diagramm d) der Fig. 6 ist hierzu das Signal 202 der Motordrehzahl $N_{mot}$ des Elektromotors 2 im Falle einer Volumensteuerung dargestellt. Im Falle der Steuerung wird zum Zeitpunkt $t_1$ erkannt, dass ein Druckaufbau gemäß Signal 100 an der linken Vorderradbremse 43 um den Betrag $\Delta P$ gewünscht ist. Anhand der Druck-Volumen-Kennlinie der Radbremse 43 wird das dazu notwendige Volumen $\Delta V$ bestimmt und sofort ein Elektromotorlauf mit hoher Drehzahl (siehe Signal 202) aktiviert, um den gemäß Gleichung (1) notwendigen Kolbenweg $\Delta s$ zu verfahren.

Bezüglich der eingestellten Kolbenposition s handelt es sich hier auch um eine Regelung (Positionsregelung), da die Kolbenposition s präzise eingestellt wird. Die Steuer- und Regeleinheit 1 misst dazu beispielsgemäß permanent die Position s über ein indirektes Verfahren, indem die direkt mit dem Kolbenweg s zusammenhängende Motor-Winkelstellung erfasst wird. Diese sollte ohnehin für die effiziente Regelung eines mehrphasigen Motors (z.B. Synchronmaschine) bekannt sein. Diese interne Regelung (innere Regelschleife) läuft mit sehr hoher Frequenz und kann mit hoher Kreisverstärkung ausgeführt werden, daher sind höhere Motordrehzahlen $N_{mot}$ möglich (angedeutet im Signalverlauf 202). Bezüglich des eingestellten Bremssystemdrucks $P_{sys}$ handelt es sich im Falle der Volumenverschiebung um eine reine Steuerung (daher wird hier auch von einer Steuerung gesprochen, obwohl die Kolbenposition selbst auch geregelt wird). Im Idealfall bleibt der Bremssystemdruck $P_{sys}$ während der Volumenverschiebung konstant auf dem zuvor erreichten Niveau.

Durch den frühzeitigen Elektromotoranlauf und die hohen Drehzahlen ist es möglich, die Kolbenbewegung zeitlich mit der Ventilöffnungszeit zur Deckung zu bringen. Wenn dies wegen der beschränkten Dynamik des Kolbens 5 nicht vollständig gelingt, dient der Bremskreis des Hochdruckrades automatisch als eine Art dynamischer Puffer. Es kann also sein, dass die Radbremse des Hochdruckrads kurzzeitig etwas Druckmittelvolumen liefert, welches der Kolben 5 noch nicht ganz in Echtzeit nachschieben kann, oder die Hochdruckradbremse nimmt vorrübergehend etwas Druckmittelvolumen auf, das der Kolben 5 aufgrund des noch nicht geöffneten Einlassventils an der Niedrigdruckradbremse noch nicht in deren Radbremskreis schieben kann. Diese Ausgleichsvorgänge führen aber nur zu vergleichsweise geringen Schwankungen im Druckverlauf der Hochdruckradbremse, wie mit den Signalverläufen 152 (leichte temporäre Druckerhöhung) und 153 (leichte temporäre Druckabsenkung) in Fig. 6 a) angedeutet ist.

Für den Fall, dass mehrere Radbremsen gleichzeitig (in einem Zeitschritt) eine Druckerhöhung benötigen, ist sicher zu stellen, dass beim Verschieben des Gesamtvolumens exakt die richtige Volumenmenge in den jeweiligen Radbremskreis gelangt. Dies wird entsprechend einem bevorzugten Verfahren über die individuell eingestellte Aktivierungszeit (Öffnungszeit) des jeweiligen Einlassventils (siehe z.B. Zeitintervall $t_4$-$t_2$ des Signals 200 in Fig. 6) erreicht. Die Aktivierungszeit (Öffnungszeit) wird vorteilhafterweise für jeden Radbremskreis separat aus der Höhe des gewünschten Druckanstiegs, der Druckdifferenz am zugehörigen Einlassventil, dem Arbeitspunkt (aktueller Druck in der Radbremse) und der Charakteristik der Blende des Einlassventils berechnet. Derartige Modellberechnungen sind an sich bekannt und werden daher hier nicht näher erläutert.

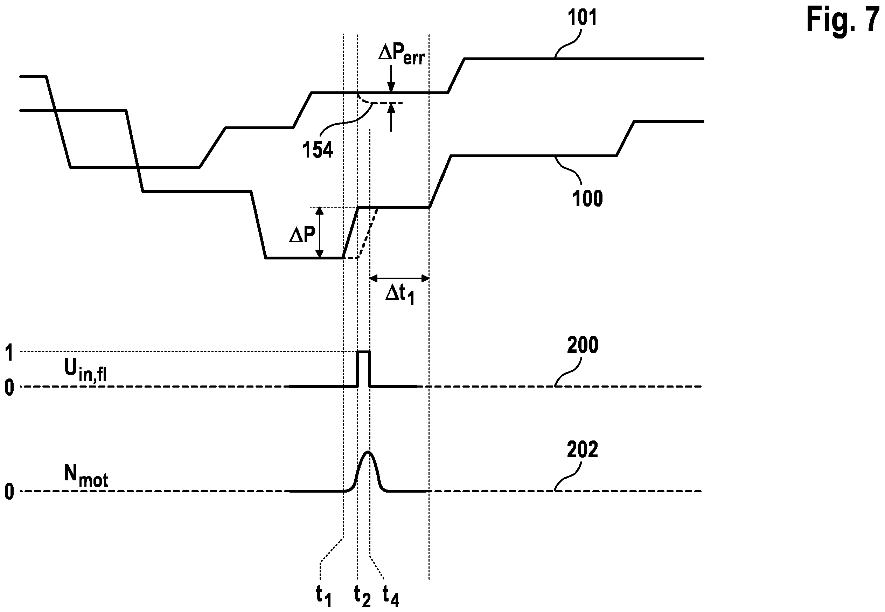

Wie schon erwähnt, wird die Volumensteuerung bevorzugt immer nur in solchen Zeitschritten aktiviert, in denen mindestens eine Radbremse einen Druckaufbau, also Druckmittelvolumen benötigt und daher mindestens ein Einlassventil dazu aktiviert wird. In den übrigen Zeitschritten wird bevorzugt auf die Druckregelung umgeschaltet, die den Bremssystemdruck $P_{sys}$ fest auf das von der Höchstdruckradbremse benötigte Niveau oder - abhängig von der gewählten Regelstrategie - auf ein leicht darüber liegendes Niveau einregelt. Eine solche Phase ist beispielsweise das Zeitintervall $\Delta t_1$ in Fig. 5, das in Fig. 7 vergrößert dargestellt ist. In dieser Phase versucht die Steuer- und Regeleinheit 1, den Systemdruck $P_{sys}$ auf das von der rechten Vorderradbremse benötigte Druckniveau (Signal 101) bzw. beispielsgemäß leicht über diesem Niveau einzuregeln.

Obwohl $P_{sys}$ im Zeitintervall $\Delta t_1$ gar nicht moduliert werden braucht, denn der erreichte Druck kann eigentlich konstant gehalten werden, wird beispielsgemäß dennoch eine Druckregelung aktiviert und durchgeführt. Der Grund für diese bevorzugte Nachregelung liegt darin, dass bei der zuvor erfolgten Steuerung aufgrund von nicht völlig exakten Modellen ein Fehler aufgetreten sein kann. Wenn beispielsweise für den Druckaufbau $\Delta P$ an der linken Vorderradbremse (Signal 100) über die Druck-Volumen-Kennlinie ein Druckmittelvolumen $\Delta V$ berechnet wird, das aufgrund einer Veränderung der Bremsencharakteristik nicht ganz dem tatsächlich notwendigen Volumenbedarf entspricht, also z.B. zu klein berechnet ist, dann wird von Kolben 5 weniger Druckmittelvolumen verschoben als die Radbremse tatsächlich aufnimmt. Das restliche Druckmittelvolumen wird dann automatisch von der Radbremse des Hochdruckrads geliefert, sodass deren Druck ein wenig zusammenbricht. An der Hochdruckradbremse entsteht dann der in Fig. 7 beispielhaft gezeigte Druckeinbruch 154 (gestrichelte Linie), also eine Abweichung $\Delta P_{err}$ vom gewünschten Niveau des idealen Signals 101. Auf etwa dasselbe Niveau 154 fällt auch $P_{sys}$ herunter, was von der Steuer- und Regeleinheit 1 zu Beginn des Intervalls $\Delta t_1$ als Regelabweichung erkannt und im Druckregelmodus ausgeregelt wird.

In einer (nachfolgenden) Regelphase werden also unvermeidbare Fehler ausgeglichen, die bei der vorher erfolgten Steuerung auftreten können, wenn das Verhalten der Systemkomponenten nicht ganz exakt dem Modell entspricht. Die Fehler bzw. unerwünschten Modulationen sind jedoch in der Regel so gering, dass sie im Vergleich mit den bei einer reinen Druckregelung auftretenden Druckeinbrüchen vernachlässigbar sind. Nachfolgende Druckregelphasen, wie beispielsweise anhand des Beispiels $\Delta t_1$ beschrieben, sind jedoch vorteilhaft, um sich über mehrere und länger andauernde Raddruckmodulationen kumulierende Fehler zu vermeiden.

Um aber auch diese kleinen Fehler im Laufe einer Regelung noch weiter zu reduzieren bzw. im Idealfall völlig zu eliminieren, wird beispielsgemäß zusätzlich ein Lernverfahren durchgeführt, das auf der messbaren Abweichung $\Delta P_{err}$ vom Sollwert für $P_{sys}$ basiert.

Beispielgemäß wird eine Modellkorrektur bzw. Korrektur des jeweils errechneten Volumenbedarfs mit den nachfolgend aufgeführten Schritten durchgeführt:

a) Ein notwendiger Korrekturfaktor (siehe Punkte b, c), d), e)) wird grundsätzlich nur dann bestimmt, wenn Druck an einem Einzelrad aufgebaut wurde und ein Mindestzeitintervall von 10ms danach auftritt, in dem kein anderes Rad einen Druckaufbau fordert.

b) Die unmittelbar nach dem Druckaufbau feststellbare Systemdruckabweichung $\Delta P_{err}$ (siehe Fig. 7) wird benutzt, um einen Volumenfehler $\Delta V_{err}$ zu ermitteln. Da die Höchstdruckradbremse der Volumenlieferant war und mit der Volumenabgabe die Systemdruckabweichung $\Delta P_{err}$ bewirkt hat, wird aus deren p-V-Kennlinie und aus deren erreichtem Druckniveau (entsprechend einer Betrachtung in Fig. 3) der Volumenfehler $\Delta V_{err}$ berechnet. Falls mehrere Radbremsen Höchstdruckradbremsen, also über offene Einlassventile direkt mit dem Druckraum 6 verbunden sind, wird $\Delta V_{err}$ aus allen diesen Radbremsen gemäß obiger Überlegung bestimmt.

c) Der Volumenfehler $\Delta V_{err}$ wird nun mit der vorherigen Volumenberechnung $\Delta V$ für die mit einem Druckaufbau beaufschlagte Radbremse in Relation gesetzt, und es wird daraus ein Korrekturfaktor $K_{mod}$, z.B. gemäß

$$K_{mod} = (1 + (\Delta V_{err}/(2*\Delta V))),$$

gebildet. Eine Berechnung eines Korrekturfaktors $K_{mod}$ nach der Beziehung

$$K_{mod} = (1 + (\Delta V_{err}/\Delta V))$$

ist auch denkbar. Es ist jedoch bei solchen Korrekturverfahren vorteilhaft, einen erkannten Fehler nicht komplett im nächsten Schritt ausgleichen zu wollen, da dies zur Instabilität der Korrektur selbst führen kann (dauerndes Toggeln des Faktors). Vorteilhaft ist eine Korrektur mit dem moderaten Faktor $K_{mod}$, die eher zu einer asymptotischen Fehlerbeseitigung führt.

d) Für jede Radbremse werden Korrekturfaktoren $K_{mod,i}$ für verschiedene Druckbereiche i (z.B. für 0-10bar, 10-20bar, 20-35bar, 35-50bar, 50-70bar, 70-100bar und 100-200bar) abgelegt, z.B. in einer Tabelle. Tritt also aufgrund der Druckerhöhung an einer Radbremse, das sich zuvor auf dem Druckniveau P befunden hat, ein Volumenfehler auf, so erfolgt die unter c) beschriebene Berechnung des Korrekturfaktors $K_{mod}$. Dieser wird in die für das Rad bestimmte Tabelle in das Feld für den Druckwert P eingetragen, wenn das Feld noch leer ist. Sollte dort schon ein Korrekturfaktor eingetragen sein, so wird das Produkt des aktuellen Faktors mit dem bereits gespeicherten Faktor gebildet und als neuer Korrekturfaktor in demselben Feld abgelegt.

e) Wird an einer Radbremse ein individueller Druckaufbau durchgeführt, so wird zunächst das dazu notwendige Volumen $\Delta V$ bestimmt. Dann wird das aktuelle Druckniveau P dazu verwendet, das entsprechende Feld in der Korrekturtabelle für dieses Rad zu adressieren. Wenn dort ein Korrekturfaktor abgelegt ist, so wird ein korrigierter Volumenbedarf nach der Gleichung:

$$\Delta V_{korr} = K_{mod} * \Delta V$$

bestimmt.

Abschließend sei angemerkt, dass die Signale 200, 201 und 202 und die auftretenden Regelabweichungen in den Fig. 6 und 7 aus Gründen der Übersichtlichkeit nur für ein kurzes Zeitintervall nach $t_1$ mit realistischen Werten und in den übrigen Zeiträumen gestrichelt oder gar nicht dargestellt sind, um die Aktionen und Effekte nur für den markierten Druckaufbau $\Delta P$ hervorzuheben.

**Patentansprüche**

1. Verfahren zum Betrieb einer elektrohydraulischen Bremsanlage für Kraftfahrzeuge mit einer radindividuellen Bremsregelfunktion (ABS, ESC, TCS) und hydraulisch betätigbaren Radbremsen (43, 44, 45, 46), welche jeweils über ein Einlassventil (18, 19, 20, 21) mit einer elektrisch steuerbaren Druckbereitstellungseinrichtung (40) trennbar verbunden sind, die eine Zylinder-Kolben-Anordnung mit einem hydraulischen Druckraum (6) umfasst, deren Kolben (5) durch einen elektromechanischen Aktuator (2, 4) zum Einstellung eines Bremssystemdrucks ($P_{sys}$) verschiebbar ist, und welche jeweils über ein Auslassventil (26, 27, 28, 29) mit einem Druckmittelvorratsbehälter (31) verbunden oder verbindbar sind, wobei für jede Radbremse ein radindividueller Rad-Solldruck ($p_i$) vorgegeben wird und eine Druckregelung (301) des Bremssystemdrucks ($P_{sys}$) der Druckbereitstellungseinrichtung durchgeführt wird, **dadurch gekennzeichnet, dass** zeitweise anstelle der Druckregelung (301) des Bremssystemdrucks eine Steuerung (303) des von der Druckbereitstellungseinrichtung abgegebenen Druckmittelvolumens durchgeführt wird, wobei eine Umschaltung (302) von der Druckregelung des Bremssystemdrucks auf die Steuerung des Druckmittelvolumens in Abhängigkeit von den für die Radbremsen vorgegebenen Rad-Solldrücken ($p_i$) durchgeführt wird, wobei die Steuerung (303) des Druckmittelvolumens durchgeführt wird, wenn an zumindest einer Radbremse eine radindividuelle Bremsdruckerhöhung durchzuführen ist (302).

2. Verfahren nach Anspruch 1, **dadurch gekennzeichnet, dass** bei der Druckregelung (301) des Bremssystemdrucks ($P_{sys}$) der Bremssystemdruck ($P_{sys}$) auf den größten Rad-Solldruck oder einen um einen vorgegebenen Betrag ($\Delta$) über dem größten Rad-Solldruck liegenden Solldruck eingeregelt wird.

3. Verfahren nach Anspruch 1 oder 2, **dadurch gekennzeichnet, dass** die Steuerung (303) des Druckmittelvolumens durchgeführt wird, wenn die radindividuelle Bremsdruckerhöhung in einer Radbremse durchzuführen ist, deren bisheriges Druckniveau unter dem eingestellten Bremssystemdruck ($P_{sys}$) im Druckraum (6) der Druckbereitstellungseinrichtung (40) liegt.

4.  Verfahren nach einem der Ansprüche 1 bis 3, **dadurch gekennzeichnet, dass** bei der Steuerung (303) des Druckmittelvolumens der Kolben (5) um einen Positionswert ($\Delta s$) verschoben wird, so dass ein anhand der vorgegebenen Rad-Solldrücke bestimmtes Druckmittelvolumen ($\Delta V$ ,$\Delta V_{sum}$) in zumindest eine Radbremse verschoben wird.

5.  Verfahren nach Anspruch 4, **dadurch gekennzeichnet, dass** der Positionswert ($\Delta s$) anhand zumindest einer für die Radbremse oder die Radbremsen vorgegebenen Druck-Volumen-Kennlinie bestimmt wird.

6.  Verfahren nach Anspruch 4 oder 5, **dadurch gekennzeichnet, dass** bei einer Bremsdruckerhöhung an zwei oder mehr Radbremsen gleichzeitig, der Positionswert ($\Delta s$) anhand einer für diese Radbremsen benötigten Summe von Druckmittelvolumina der Radbremsen ($\Delta V_{sum}$) bestimmt wird.

7.  Verfahren nach Anspruch 6, **dadurch gekennzeichnet, dass** eine radindividuelle Bremsdruckerhöhung an diesen Radbremsen durch eine Wahl radindividueller Öffnungsdauern für die entsprechenden Einlassventile erfolgt.

8.  Verfahren nach einem der Ansprüche 1 bis 7, **dadurch gekennzeichnet, dass** nach Ablauf einer Phase der Steuerung des Druckmittelvolumens eine Phase der Druckregelung des Bremssystemdrucks ($P_{sys}$) durchgeführt wird.

9.  Verfahren nach Anspruch 8, **dadurch gekennzeichnet, dass** von der Steuerung des Druckmittelvolumens auf die Druckregelung des Bremssystemdrucks zurückgeschaltet wird (304), wenn für jede der Radbremsen entweder ein Halten oder ein Abbau des Bremsdrucks durchgeführt werden soll.

10. Verfahren nach Anspruch 8 oder 9, **dadurch gekennzeichnet, dass** zu Beginn der Druckregelphase eine Abweichung ($\Delta P_{err}$) von gemessenem und, insbesondere durch die Bremsregelfunktion, vorgegebenen Bremssystemdruck ($P_{sys}$) bestimmt wird (305) und dass anhand der Abweichung eine Korrektur eines Modells zur Steuerung (303) des Druckmittelvolumens durchgeführt wird.

11. Verfahren nach Anspruch 10, **dadurch gekennzeichnet, dass** anhand der Abweichung ($\Delta P_{err}$) und

einer Druck-Volumen-Kennlinie ein, insbesondere radindividueller, Korrekturfaktor ($K_{mod}$, $K_{mod,i}$) bestimmt wird, der insbesondere in Abhängigkeit von dem Radbremsdruck bestimmt wird.

12. Verfahren nach Anspruch 11, **dadurch gekennzeichnet, dass** anhand des Korrekturfaktors ($K_{mod}$, $K_{mod,i}$) ein korrigiertes Druckmittelvolumen ($\Delta V_{korr}$) für eine Radbremse für eine nachfolgende Phase einer Steuerung (303) des Druckmittelvolumens bestimmt wird.

13. Bremsanlage für Kraftfahrzeuge mit

    • einer radindividuellen Bremsregelfunktion (ABS, ESC, TCS),
    • hydraulisch betätigbaren Radbremsen (43, 44, 45, 46), wobei für jede Radbremse ein radindividueller Rad-Solldruck ($p_i$) vorgegeben wird,
    • einer elektrisch steuerbaren Druckbereitstellungseinrichtung (40), die eine Zylinder-Kolben-Anordnung mit einem hydraulischen Druckraum (6) umfasst, deren Kolben (5) durch einen elektromechanischen Aktuator (2, 4) verschiebbar ist, wobei jede Radbremse über ein Einlassventil (18, 19, 20, 21) mit der Druckbereitstellungseinrichtung (40) trennbar verbunden und über ein Auslassventil (26, 27, 28, 29) mit einem Druckmittelvorratsbehälter (31) verbunden oder verbindbar ist,
    • einer Erfassungseinrichtung (47) zur Bestimmung eines Bremssystemdrucks ($P_{sys}$) der Druckbereitstellungseinrichtung,
    • einer Erfassungseinrichtung (48) zur Bestimmung einer Position (s) der Druckbereitstellungseinrichtung, insbesondere des Aktuators, und
    • einer elektronischen Steuer- und Regeleinheit (1) zur Ansteuerung des elektromechanischen Aktuators, in welcher eine Druckregelung (301) des Bremssystemdruckes der Druckbereitstellungseinrichtung (40) durchgeführt wird,

    **dadurch gekennzeichnet, dass**
    in der elektronischen Steuer- und Regeleinheit zeitweise anstelle der Druckregelung (301) des Bremssystemdrucks eine Steuerung (303) des von der Druckbereitstellungseinrichtung abgegebenen Druckmittelvolumens durchgeführt wird, wobei eine Umschaltung (302) von der Druckregelung des Bremssystemdrucks auf die Steuerung des Druckmittelvolumens in Abhängigkeit von den für die Radbremsen vorgegebenen Rad-Solldrücken ($p_i$) durchgeführt wird, wobei die Steuerung (303) des Druckmittelvolumens durchgeführt wird, wenn an zumindest einer Radbremse eine radindividuelle Bremsdruckerhöhung durchzuführen ist (302).

**14.** Bremsanlage nach Anspruch 13, **dadurch gekennzeichnet, dass**

in der elektronischen Steuer- und Regeleinheit ein Verfahren gemäß einem der Ansprüche 2 bis 12 durchgeführt wird.

## Claims

**1.** Method for operating an electrohydraulic brake system for motor vehicles having a wheel-specific closed-loop brake control function (ABS, ESC, TCS) and hydraulically actuable wheel brakes (43, 44, 45, 46), which are each disconnectably connected to an electrically controllable pressure supply device (40) via an inlet valve (18, 19, 20, 21), said pressure supply device (40) comprising a cylinder-piston arrangement with a hydraulic pressure space (6), the piston (5) of which can be moved by an electromechanical actuator (2, 4) in order to set a brake system pressure ($P_{sys}$), and which are each connected or can be connected to a pressure medium reservoir (31) via an outlet valve (26, 27, 28, 29), wherein a wheel-specific setpoint wheel pressure ($p_i$) is specified for each wheel brake, and closed-loop pressure control (301) of the brake system pressure ($P_{sys}$) of the pressure supply device is carried out, **characterized in that** at certain times open-loop control (303) of the pressure medium volume which is output by the pressure supply device is carried out instead of closed-loop pressure control (301) of the brake system pressure, wherein a switchover (302) from closed-loop pressure control of the brake system pressure to open-loop control of the pressure medium volume is carried out in accordance with the setpoint wheel pressures ($p_i$) which are specified for the wheel brakes, wherein the open-loop control (303) of the pressure medium volume is carried out when a wheel-specific brake pressure increase is to be carried out (302) at at least one wheel brake.

**2.** Method according to Claim 1, **characterized in that**, in the closed-loop pressure control (301) of the brake system pressure ($P_{sys}$), the brake system pressure ($P_{sys}$) is adjusted to the highest setpoint wheel pressure or to a setpoint pressure higher than the highest setpoint wheel pressure by a specified amount ($\Delta$).

**3.** Method according to Claim 1 or 2, **characterized in that** the open-loop control (303) of the pressure medium volume is carried out if the wheel-specific brake pressure increase is to be carried out in a wheel brake whose previous pressure level lies below the set brake system pressure ($p_{sys}$) in the pressure space (6) of the pressure supply device (40).

**4.** Method according to one of Claims 1 to 3, **characterized in that**, during the open-loop control (303) of the pressure medium volume, the piston (5) is moved by a position value ($\Delta s$), with the result that a pressure medium volume ($\Delta V$, $\Delta V_{sum}$) determined by means of the specified setpoint wheel pressures is displaced into at least one wheel brake.

**5.** Method according to Claim 4, **characterized in that** the position value ($\Delta s$) is determined by means of at least one pressure/volume characteristic specified for the wheel brake or the wheel brakes.

**6.** Method according to Claim 4 or 5, **characterized in that**, in the case of a brake pressure increase at two or more wheel brakes simultaneously, the position value ($\Delta s$) is determined by means of a sum of pressure medium volumes of the wheel brakes ($\Delta V_{sum}$) which is required for said wheel brakes.

**7.** Method according to Claim 6, **characterized in that** a wheel-specific brake pressure increase at said wheel brakes is accomplished through a choice of wheel-specific opening durations for the corresponding inlet valves.

**8.** Method according to one of Claims 1 to 7, **characterized in that**, after the completion of a phase of open-loop control of the pressure medium volume, a phase of closed-loop pressure control of the brake system pressure ($P_{sys}$) is carried out.

**9.** Method according to Claim 8, **characterized in that** the system switches back (304) from open-loop control of the pressure medium volume to closed-loop pressure control of the brake system pressure when either holding or reduction of the brake pressure is to be carried out for each of the wheel brakes.

**10.** Method according to Claim 8 or 9, **characterized in that** a deviation ($\Delta P_{err}$) between the measured brake system pressure ($P_{sys}$) and the specified brake system pressure ($P_{sys}$), in particular the brake system pressure specified by the closed-loop brake control function, is determined at the beginning of the closed-loop pressure control phase and **in that** a correction of a model for open-loop control (303) of the pressure medium volume is carried out using the deviation.

**11.** Method according to Claim 10, **characterized in that** a correction factor ($K_{mod}$, $K_{mod,i}$), in particular a wheel-specific correction factor, is determined by means of the deviation ($\Delta P_{err}$) and of a pressure/volume characteristic, said factor being determined, in particular, in accordance with the wheel brake pressure.

**12.** Method according to Claim 11, **characterized in that** a corrected pressure medium volume ($\Delta V_{korr}$)

for a wheel brake in a subsequent phase of open-loop control (303) of the pressure medium volume is determined by means of the correction factor ($K_{mod}$, $K_{mod,i}$).

13. Brake system for motor vehicles having

  • a wheel-specific closed-loop brake control function (ABS, ESC, TCS),
  • hydraulically actuable wheel brakes (43, 44, 45, 46), wherein a wheel-specific setpoint wheel pressure ($p_i$) is specified for each wheel brake,
  • an electrically controllable pressure supply device (40), which comprises a cylinder-piston arrangement with a hydraulic pressure space (6), the piston (5) of which can be moved by an electromechanical actuator (2, 4), wherein each wheel brake is disconnectably connected to the pressure supply device (40) via an inlet valve (18, 19, 20, 21) and is connected or can be connected to a pressure medium reservoir (31) via an outlet valve (26, 27, 28, 29),
  • a detection device (47) for determining a brake system pressure ($P_{sys}$) of the pressure supply device,
  • a detection device (48) for determining a position (s) of the pressure supply device, in particular of the actuator, and
  • an electronic open-loop and closed-loop control unit (1) for controlling the electromechanical actuator, in which unit closed-loop pressure control (301) of the brake system pressure of the pressure supply device (40) is carried out,

  **characterized in that**
  in the electronic open-loop and closed-loop control unit at certain times open-loop control (303) of the pressure medium volume which is output by the pressure supply device is carried out instead of closed-loop pressure control (301) of the brake system pressure, wherein a switchover (302) from closed-loop pressure control of the brake system pressure to open-loop control of the pressure medium volume is carried out in accordance with the setpoint wheel pressures ($p_i$) which are specified for the wheel brakes, wherein the open-loop control (303) of the pressure medium volume is carried out when a wheel-specific brake pressure increase is to be carried out (302) at at least one wheel brake.

14. Brake system according to Claim 13, **characterized in that** a method according to one of Claims 2 to 12 is carried out in the electronic open-loop and closed-loop control unit.

**Revendications**

1. Procédé de fonctionnement d'un système de freinage électrohydraulique pour véhicules automobiles avec une fonction de régulation du freinage de roue individuelle (ABS, ESC, TCS) et des freins de roue à actionnement hydraulique (43, 44, 45, 46), qui sont raccordés de façon séparable respectivement par une soupape d'entrée (18, 19, 20, 21) à un dispositif de production de pression à commande électrique (40), qui comprend un dispositif piston-cylindre avec une chambre de pression hydraulique (6), dont le piston (5) peut être déplacé par un actionneur électromécanique (2, 4) pour le réglage d'une pression du système de freinage ($P_{sys}$), et qui sont ou peuvent être raccordés respectivement par une soupape de sortie (26, 27, 28, 29) à un réservoir de stockage de fluide sous pression (31), dans lequel une pression de consigne de roue ($p_i$) de roue individuelle est prédéterminée pour chaque frein de roue et on effectue une régulation de pression (301) de la pression du système de freinage ($P_{sys}$) du dispositif de production de pression, **caractérisé en ce que** l'on exécute temporairement, au lieu de la régulation de pression (301) de la pression du système de freinage, une commande (303) du volume de fluide sous pression délivré par le dispositif de production de pression, dans lequel on opère une commutation (302) de la régulation de pression de la pression du système de freinage à la commande du volume de fluide sous pression en fonction des pressions de consigne de roue ($p_i$) prédéterminées pour les freins de roue, dans lequel on exécute la commande du volume de fluide sous pression, lorsqu'une augmentation de pression de freinage de roue individuelle (302) doit être effectuée à au moins un frein de roue.

2. Procédé selon la revendication 1, **caractérisé en ce que**, lors de la régulation de pression (301) de la pression du système de freinage ($P_{sys}$), on régule la pression du système de freinage ($P_{sys}$) sur la plus haute pression de consigne de roue ou sur une pression de consigne située d'un montant prédéterminé ($\Delta$) au-dessus de la plus haute pression de consigne de roue.

3. Procédé selon la revendication 1 ou 2, **caractérisé en ce que** l'on effectue la commande (303) du volume de fluide sous pression lorsqu'il faut effectuer l'augmentation de pression de freinage de roue individuelle dans un frein de roue, dont le niveau de pression actuel est situé en dessous de la pression de système de freinage réglée ($P_{sys}$) dans la chambre de pression (6) du dispositif de production de pression (40).

4. Procédé selon l'une quelconque des revendications 1 à 3, **caractérisé en ce que**, lors de la commande (303) du volume de fluide sous pression, on déplace le piston (5) d'une valeur de position (Δs), de telle manière qu'un volume de fluide sous pression (ΔV, ΔV$_{sum}$) déterminé à l'aide des pressions de consigne de roue prédéterminées soit déplacé dans au moins un frein de roue.

5. Procédé selon la revendication 4, **caractérisé en ce que** la valeur de position (Δs) est déterminée à l'aide d'au moins une courbe caractéristique pression-volume prédéterminée pour le frein de roue ou pour les freins de roue.

6. Procédé selon la revendication 4 ou 5, **caractérisé en ce que**, lors d'une augmentation de pression de freinage simultanément à deux ou plusieurs freins de roue, on détermine la valeur de position (Δs) à l'aide d'une somme de volumes de fluide sous pression des freins de roue (ΔV$_{sum}$) nécessaire pour ces freins de roue.

7. Procédé selon la revendication 6, **caractérisé en ce que** l'on effectue une augmentation de pression de freinage de roue individuelle à ces freins de roue par un choix de durées d'ouverture de roue individuelle pour les soupapes d'entrée correspondantes.

8. Procédé selon l'une quelconque des revendications 1 à 7, **caractérisé en ce qu'**après l'écoulement d'une phase de la commande du volume de fluide sous pression, on exécute une phase de régulation de pression de la pression du système de freinage (P$_{sys}$).

9. Procédé selon la revendication 8, **caractérisé en ce que** l'on revient de la commande du volume de fluide sous pression à la régulation de pression de la pression du système de freinage (304), lorsqu'il faut exécuter pour chacun des freins de roue soit un maintien soit une baisse de la pression de freinage.

10. Procédé selon la revendication 8 ou 9, **caractérisé en ce qu'**au commencement de la phase de régulation de pression, on détermine (305) un écart (ΔP$_{err}$) par rapport à la pression du système de freinage (P$_{sys}$) mesurée et prédéterminée, en particulier par la fonction de régulation du freinage, et **en ce que** l'on opère à l'aide dudit écart une correction d'un modèle pour la commande (303) du volume de fluide sous pression.

11. Procédé selon la revendication 10, **caractérisé en ce que** l'on détermine à l'aide de l'écart (ΔP$_{err}$) et d'une courbe caractéristique pression-volume un facteur de correction (K$_{mod}$, K$_{mod,i}$), en particulier de roue individuelle, que l'on détermine en particulier en fonction de la pression du frein de roue.

12. Procédé selon la revendication 11, **caractérisé en ce que** l'on détermine à l'aide du facteur de correction (K$_{mod}$, K$_{mod,i}$) un volume de fluide sous pression corrigé (ΔV$_{corr}$) pour un frein de roue pour une phase suivante d'une commande (303) du volume de fluide sous pression.

13. Système de freinage pour véhicules automobiles, avec

- une fonction de régulation du freinage de roue individuelle (ABS, ESC, TCS),
- des freins de roue à actionnement hydraulique (43, 44, 45, 46), dans lequel une pression de consigne de roue (p$_i$) de roue individuelle est prédéterminée pour chaque frein de roue,
- un dispositif de production de pression à commande électrique (40), qui comprend un dispositif piston-cylindre avec une chambre de pression hydraulique (6), dont le piston (5) peut être déplacé par un actionneur électromécanique (2, 4), dans lequel chaque frein de roue est raccordé au dispositif de production de pression (40) par une soupape d'entrée (18, 19, 20, 21) et est ou peut être raccordé à un réservoir de stockage de fluide sous pression (31) par une soupape de sortie (26, 27, 28, 29),
- un dispositif de détection (47) pour la détermination d'une pression du système de freinage (P$_{sys}$) du dispositif de production de pression,
- un dispositif de détection (48) pour la détermination d'une position (s) du dispositif de production de pression, en particulier de l'actionneur, et
- une unité électronique de commande et de régulation (1) pour la commande de l'actionneur électromécanique, dans laquelle on effectue une régulation de pression (301) de la pression du système de freinage du dispositif de production de pression (40),

**caractérisé en ce que** l'on exécute temporairement dans l'unité électronique de commande et de régulation, au lieu de la régulation de pression (301) de la pression du système de freinage, une commande (303) du volume de fluide sous pression délivré par le dispositif de production de pression, dans lequel on opère une commutation (302) de la régulation de pression de la pression du système de freinage à la commande du volume de fluide sous pression en fonction des pressions de consigne de roue (p$_i$) prédéterminées pour les freins de roue, dans lequel on exécute la commande du volume de fluide sous pression, lorsqu'une augmentation de pression de freinage de roue individuelle (302) doit être effectuée à au moins un frein de roue.

14. Système de freinage selon la revendication 13, **caractérisé en ce que** l'on exécute dans l'unité électronique de commande et de régulation un procédé selon l'une quelconque des revendications 2 à 12.

Fig. 1

EP 2 978 644 B1

# Fig. 2

Fig. 3

Fig. 4

EP 2 978 644 B1

Fig. 5

Fig. 6

a)

101

152

153

151

100

$\Delta P$ $\Delta P_{err}$

150

b)

1

$U_{in,fl}$

0

200

$t_4$

c)

0

$N_{mot}$

201

Druckregelung

d)

0

$N_{mot}$

202

Volumensteuerung

$t_1$ $t_2$ $t_3$

Fig. 7

**IN DER BESCHREIBUNG AUFGEFÜHRTE DOKUMENTE**

**In der Beschreibung aufgeführte Patentdokumente**

- DE 102011076675 A1
- WO 2012010475 A1
- DE 102011077329 A1